# EUROPÄISCHE PATENTSCHRIFT

(11) **EP 3 297 795 B1**
(45) Veröffentlichungstag und Bekanntmachung des Hinweises auf die Patenterteilung: **20.10.2021**
(21) Anmeldenummer: 16723734.6
(22) Anmeldetag: 17.05.2016
(51) Int. Cl.: B25J 19/00

(54) **ROBOTER MIT EINEM ENERGIELEITUNGSSTRANG**
ROBOT COMPRISING A POWER CABLE HARNESS
ROBOT ÉQUIPÉ D'UN ENSEMBLE DE LIGNES D'ÉNERGIE

(30) Priorität: 22.05.2015 DE 102015209547
(43) Veröffentlichungstag der Anmeldung: 28.03.2018
(73) Patentinhaber: KUKA Deutschland GmbH, 86165 Augsburg (DE)
(72) Erfinder: REEKERS, Andre, 86163 Augsburg (DE); TORRES, Jorge, 86356 Neusäß (DE); KARLINGER, Stefan, 86199 Augsburg (DE)
(74) Vertreter: Böss, Dieter Alexander
(86) Internationale Anmeldenummer: PCT/EP2016/061005
(87) Internationale Veröffentlichungsnummer: WO 2016/188797

(56) Entgegenhaltungen:
- EP-A1- 0 593 786
- EP-A1- 0 677 359
- DE-A1-102012 200 186
- US-A- 5 732 599
- US-A- 5 881 604

## Beschreibung

Die Erfindung betrifft einen Roboter, aufweisend einen Roboterarm mit mehreren durch Glieder verbundenen Gelenken, die von Antriebsmotoren des Roboters, welche an die Gelenke angekoppelt sind, gemäß eines Roboterprogramms automatisiert oder in einem Handfahrbetrieb des Roboters antriebsgesteuert verstellbar sind, um die Konfiguration des Roboterarms zu verändern, wobei ein erstes Glied mit einem zweiten Glied durch wenigstens ein Gelenk verbunden ist, über das ein Energieleitungsstrang des Roboterarms, der ausgebildet ist, Antriebsenergie an den wenigstens einen Antriebsmotor zu übertragen, hinweggeführt ist.

Die DE 10 2012 200 186 A1 und die US 5,732,599 beschreiben jeweils einen Roboterarm, bei dem ein zwischen einem ersten und zweiten Armabschnitt gebildetes Gelenk ein das kompakte Design des Roboterarms unterstützendes Leitungsgehäuse aufweist, welches eine schützende Abdeckung für Leitungen bildet, die aus dem ersten Armabschnitt herausgeführt, um das Gelenk herumgeführt und in den zweiten Armabschnitt hineingeführt sind.

Aufgabe der Erfindung ist es, einen Roboter zu schaffen, dessen Energieleitungsstrang besonders gut gegen äußere Einflüsse seiner Arbeitsumgebung geschützt ist.

Diese Aufgabe wird erfindungsgemäß gelöst durch eine Roboter, aufweisend einen Roboterarm mit mehreren durch Glieder verbundenen Gelenken, die von Antriebsmotoren des Roboters, welche an die Gelenke angekoppelt sind, gemäß eines Roboterprogramms automatisiert oder in einem Handfahrbetrieb des Roboters antriebsgesteuert verstellbar sind, um die Konfiguration des Roboterarms zu verändern, wobei ein erstes Glied mit einem zweiten Glied durch wenigstens ein Gelenk verbunden ist, über das ein Energieleitungsstrang des Roboterarms, der ausgebildet ist, Antriebsenergie an den wenigstens einen Antriebsmotor zu übertragen, hinweggeführt ist, wobei:
- das erste Glied ein erstes hohles Strukturteil aufweist, innerhalb dem ein erster Strangabschnitt des Energieleitungsstrangs geführt ist,
- das zweite Glied ein zweites hohles Strukturteil aufweist, innerhalb dem ein zweiter Strangabschnitt des Energieleitungsstrangs geführt ist,
- der Energieleitungsstrang einen zwischen dem ersten Strangabschnitt des Energieleitungsstrangs und dem zweiten Strangabschnitt des Energieleitungsstrangs verlaufenden Zwischenstrangabschnitt aufweist, der außerhalb des ersten hohlen Strukturteils und außerhalb des zweiten hohlen Strukturteils verläuft,
- der Roboterarm ein den Zwischenstrangabschnitt einschließendes Leitungsgehäuse aufweist, und wobei das Leitungsgehäuse eine Gehäuseschale mit einer Eintrittsöffnung aufweist, über welche der aus dem ersten hohlen Strukturteil austretende Zwischenstrangabschnitt in das Leitungsgehäuse eintritt und die Gehäuseschale eine Austrittsöffnung aufweist, über welche der Zwischenstrangabschnitt aus dem Leitungsgehäuse austritt und dann in das zweite hohle Strukturteil eintritt, wobei die Gehäuseschale einen die Eintrittsöffnung umgebenden Flansch aufweist, der zum starren Befestigen der Gehäuseschale an dem ersten hohlen Strukturteil ausgebildet ist, und die Gehäuseschale einen um die Austrittsöffnung umlaufenden Ring aufweist, welcher Teil einer die Gehäuseschale am zweiten hohlen Strukturteil drehbar lagernden Lageranordnung des Roboterarms und/oder Teil einer die Gehäuseschale gegen das zweite hohle Strukturteil abdichtenden Dichtungsanordnung des Roboterarms bildet, und wobei der Energieleitungsstrang einen den Zwischenstrangabschnitt einfassenden Schutzschlauch aufweist, der ein erstes Schutzschlauchende aufweist, und die Gehäuseschale ein Drehlager aufweist, das ausgebildet ist, das erste Schutzschlauchende drehbar an der Gehäuseschale zu lagern.

Der Roboter kann ein sogenannter Knickarmroboter sein, dessen Roboterarm ein Grundgestell als ein Glied aufweist, an dem ein Karussell als folgendes Glied um eine vertikale Achse drehbar gelagert und mittels eines ersten Antriebsmotors drehangetrieben ist. An dem Karussell kann eine Schwinge als weiteres Glied um eine zweite horizontale Achse auf und ab schwenkbar gelagert und mittels eines zweiten Antriebsmotors drehangetrieben sein. Die Schwinge trägt einen Armausleger, der um eine dritte horizontale Achse auf und ab schwenkbar gelagert und mittels eines dritten Antriebsmotors drehangetrieben ist. An dem Armausleger, dessen Grundarm ein weiteres Glied bildet, kann eine vierte Achse vorgesehen sein, welche in Längserstreckung des Armauslegers verläuft und über einen vierten Antriebsmotors eine Roboterhand, die einen Vorderarm des Armauslegers bildet und ein weiteres Glied darstellt, drehantreibt ist. Von der Roboterhand kann sich ein erster Schenkel und ein zweiter Schenkel gabelförmig nach vorne erstrecken. Die beiden Schenkel tragen eine Lagerung für ein freies Ende der Roboterhand, das ein vorletztes Glied bildet. Die Lagerung definiert eine fünfte Achse des Roboterarms, um welche die Roboterhand mittels eines fünften Antriebsmotors schwenkbar bewegt werden kann. Ergänzend weist die Roboterhand eine sechste Achse auf, um einen Befestigungsflansch, der ein letztes Glied bildet, mittels eines sechsten Antriebsmotors drehbar antreiben zu können.

Jedes der Gelenke kann als ein Drehgelenk ausgebildet sein. Jedes Glied ist ausgebildet, Kräfte und Momente, welche insbesondere von einem Greifer oder Werkzeug, das durch den Roboter gehandhabt, insbesondere bewegt wird, über einen Werkzeugbefestigungsflansch des Roboterarms in den Roboterarm, d.h. in seine Struktur eingeleitet wird, von einem Gelenk an ein folgendes Gelenk weiterzuleiten. Daneben müssen auch Kräfte und Momente, welche von der Eigengewichtskraft des Roboterarms stammen, in das Grundgestell des Roboterarms weitergeleitet werden. Jedes Glied des Roboterarms weist dazu mindestens ein Strukturteil auf, das ausgebildet ist, diese Kräfte und Momente aufnehmen und weiterleiten zu können. Im Allgemeinen ist ein solches Strukturteil hohl ausgebildet und kann beispielsweise von einem Metallgussteil oder einer geschweißten Stahlkonstruktion bestehen, welche beispielsweise Rohrabschnitte aufweisen kann. Jedes Glied ist über eines der Gelenke mit einem unmittelbar folgenden Glied des Roboterarms verbunden, insbesondere drehbar verbunden. Dazu kann das jeweilige Gelenk ein Drehlager aufweisen. Jedem Drehlager kann eine Dichtungsanordnung, wie beispielsweise ein Radialwellendichtring zugeordnet sein. An jedes Gelenk bzw. jedes Drehlager kann ein eigener Antriebsmotor, wie beispielsweise ein Elektromotor, insbesondere ein Servomotor, mit zughöriger Antriebssteuerung automatisch antreibbar angekoppelt sein. Die Antriebe werden im Allgemeinen von einer Robotersteuerung des Roboters angesteuert. Durch die Robotersteuerung können die Gelenke mittels der Antriebe gemäß eines Roboterprogramms automatisiert oder in einem Handfahrbetrieb des Roboters antriebsgesteuert verstell werden, um die Konfiguration des Roboterarms zu verändern. Unter einer Konfiguration wird die Menge der momentanen, einzelnen Achswinkelstellungen der Gelenke des Roboterarms verstanden.

Um die Antriebsmotoren durch die Robotersteuerung ansteuern zu können, ist die Robotersteuerung über einen Energieleitungsstrang mit allen Antriebsmotoren verbunden. Im Falle von elektrischen Antriebsmotoren kann der Energieleitungsstrang von einem Bündel von mehreren elektrischen Leitungen gebildet werden, wobei jeweils mindestens eine elektrische Leitung zu jeweils einem der Antriebsmotoren führt. Da im Allgemeinen ein solcher Energieleitungsstrang über ein Grundgestell des Roboterarms eingeführt und entlang des Roboterarms bis zum Antriebsmotor des letzten, d.h. des distalen Endgelenks geführt wird, läuft der Energieleitungsstrang mit entsprechenden Leitungsabzweigungen und einhergehenden Leitungsquerschnittsverringerungen entlang bzw. durch den gesamten Roboterarm. Je nach Bauart des Roboterarms kann der Energieleitungsstrang vollständig innerhalb der hohlen Glieder, d.h. der hohlen Strukturteile des Roboterarms verlegt sein oder außen entlang der Glieder, d.h. der Strukturteile des Roboterarms verlegt sein, die dann nicht zwingend hohl sein müssen.

Auch wenn die Glieder des Roboterarms als hohle Strukturteile ausgebildet sind, kann es beispielsweise aufgrund der Bauart der Gelenke, der Konstruktion von Getrieben und der Anordnung der Antriebsmotoren zweckmäßig oder sogar erforderlich sein, dass ein innerhalb eines der hohlen Glieder geführter Energieleitungsstrang im Bereich eines oder mehrerer der Gelenke des Roboterarms aus einem ersten Glied, d.h. aus einem ersten hohlen Strukturteil herausgeführt wird, außerhalb der Glieder bzw. außerhalb der hohlen Strukturteile um das betreffende Gelenk herumgeführt wird und anschließend in das unmittelbar folgende zweite Glied, d.h. in das zweite hohle Strukturteil wieder eingeleitet wird.

Bei einer solchen Bauart liegen dann allerdings wenigstens ein Zwischenabschnitt oder sogar mehrere Zwischenabschnitte des Energieleitungsstrangs weitgehend ungeschützt außerhalb des Roboterarms.

Indem der Roboterarm erfindungsgemäß ein den Zwischenstrangabschnitt einschließendes Leitungsgehäuse aufweist, kann der eine Zwischenabschnitt oder die mehreren Zwischenabschnitte des Energieleitungsstrangs besonders gut gegen äußere Einflüsse der Arbeitsumgebung des Roboters geschützt werden.

Das Leitungsgehäuse schließt insoweit den außerhalb des Roboterarms verlaufenden Zwischenstrangabschnitt ein, derart, dass aus der Arbeitsumgebung auf den Roboterarm einwirkende Feststoffe, wie beispielsweise Stäube, und/oder Flüssigkeiten, wie beispielsweise Wasser, Reinigungsmittel oder Lösungsmittel, und/oder gasförmige Stoffe nicht in das Leitungsgehäuse eindringen können und somit der außerhalb des Roboterarms verlaufende Zwischenstrangabschnitt nicht mit diesen Stoffen in Kontakt kommen kann. So kann die Lebensdauer und Betriebssicherheit des Roboters verbessert werden, insbesondere in unwirtlichen Arbeitsumgebungen. Das Leitungsgehäuse kann abgedichtet an einem der Glieder es Roboterarms befestigt sein. Weist der Roboterarm mehrere außerhalb des Roboterarms verlaufende Zwischenstrangabschnitte auf, so kann jedem Zwischenstrangabschnitte ein separates Leitungsgehäuse zugeordnet sein.

Das wenigstens eine Leitungsgehäuse ist demgemäß ein sich von den Gliedern des Roboterarms, d.h. von den hohlen Strukturbauteilen verschiedenes Bauteil. Das Leitungsgehäuse ist also kein tragendes Glied des Roboterarms. Das Leitungsgehäuse nimmt insoweit keine tragende Funktion wahr, um die Glieder des Roboterarms in einer bestimmten Konfiguration, d.h. Gelenkstellungen zu halten. Vielmehr werden von dem Leitungsgehäuse keine diesbezüglichen Kräfte und/oder Momente übertragen. Das Leitungsgehäuse ist somit lediglich dazu ausgebildet, einen außerhalb des eigentlichen Roboterarms, der durch die Glieder und Gelenke gebildet wird, liegenden Zwischenstrangabschnitt gegenüber der Umgebung abzudichten.

Das Leitungsgehäuse ist insbesondere dazu ausgebildet, einen Zwischenstrangabschnitt des Energieleitungsstrangs abzudichten, der außerhalb eines Gelenks des Roboterarms entlanggeführt ist, das ein erstes Glied des Roboterarms unmittelbar mit einem zweiten Glied des Roboterarms verbindet. Der Energieleitungsstrang läuft dabei insoweit zunächst innerhalb des ersten hohlen Strukturbauteils des ersten Glieds, ist aus diesem ersten hohlen Strukturbauteil herausgeführt, läuft dann außerhalb des Roboterarms als der Zwischenstrangabschnitt außerhalb des betreffenden Gelenks herum und taucht dann in das zweite hohle Strukturbauteil des zweiten Glieds hinein. Zwischen dem ersten Glied und dem zweiten Glied ist insoweit kein zusätzliches Glied, wie ein Zwischenglied vorhanden. Eine Übertragung von Kräften und/oder Momenten, um die Glieder des Roboterarms in einer bestimmten Konfiguration, d.h. Gelenkstellungen zu halten, erfolgt also nur über dasjenige Gelenk, welches das erste Glied unmittelbar mit dem zweiten Glied verbindet und nicht über das Leitungsgehäuse.

Das Leitungsgehäuse kann außen an dem einen hohlen Strukturbauteil, beispielsweise des ersten Gelenks, befestigt sein, insbesondere abgedichtet befestigt sein und von außen an dem anderen hohlen Strukturbauteil, beispielsweise des zweiten Gelenks mittels eine Lagerung und/oder einer Dichtungsvorrichtung drehbar gelagert sein. Die Dichtungsvorrichtung dichtet dabei einen Innenraum des Leitungsgehäuses gegenüber der Umgebung ab. Die Lagerung und/oder die Dichtungsvorrichtung fluchtet dabei in axialer Richtung mit der Drehachse des zugeordneten Gelenks.

Das Leitungsgehäuse kann beispielsweise eine starre Gehäuseschale sein, die als ein Tiefziehteil, ein Metallgussteil, insbesondere ein Aluminiumgussteil, oder als ein Kunststoffspritzgussteil hergestellt sein kann. Das Leitungsgehäuse ist insbesondere derart gestaltet, dass es resistent ist gegen die einwirkenden Stoffe der Arbeitsumgebung, wie die genannten Stäube, und/oder Flüssigkeiten, wie beispielsweise Wasser, Reinigungsmittel oder Lösungsmittel, und/oder gasförmige Stoffe, aber insbesondere aus Kostengründen nur eine maximale Festigkeit aufweist, die nicht geeignet ist, als ein tragendes Strukturteil dienen zu können. Anders ausgedrückt kann das Leitungsgehäuse aus einem Material geringer Festigkeit und geringer Wandstärke hergestellt sein, die deutlich kleiner ist, als dies erforderlich wäre, um Kräfte und Momente, welche insbesondere von einem Greifer oder Werkzeug, das durch den Roboter gehandhabt, insbesondere bewegt wird, über einen Werkzeugbefestigungsflansch des Roboterarms in den Roboterarm, d.h. in seine Struktur eingeleitet werden, über das Leitungsgehäuse abstützen bzw. weiterleiten zu können. Dies gilt auch hinsichtlich der Kräfte und Momente, welche von der Eigengewichtskraft des Roboterarms stammen, und die in das Grundgestell des Roboterarms weitergeleitet werden müssen, jedoch nicht über das Leitungsgehäuse geführt werden.

Im Folgenden wird das Leitungsgehäuse für einen einzelnen Zwischenstrangabschnitt zwischen einem repräsentativen ersten Glied bzw. einem ersten hohlen Strukturteil und einem repräsentativen zweiten Glied bzw. einem zweiten hohlen Strukturteil beschrieben. Das erste Glied und das zweite Glied können jedoch unabhängig ihrer verwendeten Nummerierung von beliebigen, insbesondere unmittelbar benachbarten beliebigen Gliedern des Roboterarms gebildet werden und insoweit in speziellen Ausführungsformen bei mehreren Leitungsgehäusen an einem einzigen Roboterarm auch mehrfach auftreten.

Das Leitungsgehäuse ist einerseits mit dem ersten hohlen Strukturteil starr verbunden und andererseits relativ zum zweiten hohlen Strukturteil verstellbar gelagert.

Eine starre Verbindung des Leitungsgehäuses mit dem ersten hohlen Strukturteil kann mittels einer Flanschverbindung erfolgen. Die Flanschverbindung kann lösbare Befestigungsmittel, insbesondere Schrauben umfassen, durch welche das Leitungsgehäuses mit dem ersten hohlen Strukturteil verbunden ist. Dabei kann das erste hohle Strukturteil an seiner äußeren Mantelwand eine Flanschfläche aufweisen und das Leitungsgehäuse eine der Flanschfläche entsprechende Gegenflanschfläche aufweisen. Zwischen der Flanschfläche des ersten hohlen Strukturteils und der Gegenflanschfläche des Leitungsgehäuses kann eine Dichtung, insbesondere eine statische Dichtung eingefügt sein. Die Dichtung kann beispielsweise eine Flachdichtung aus elastischem Kunststoff oder Papier sein. Im Falle einer starren Verbindung von Leitungsgehäuses und erstem hohlen Strukturteil mittels Schrauben können beispielsweise der Flanschfläche des ersten hohlen Strukturteils mehrere Gewindebohrungen zugeordnet sein und der Gegenflanschfläche des Leitungsgehäuses eine entsprechende Anzahl von Durchgangsbohrungen zugeordnet sein, wobei Schrauben durch die Durchgangsbohrungen des Leitungsgehäuses hindurch gesteckt sind, welche mit ihren Gewindeabschnitten in die Gewindebohrungen des ersten hohlen Strukturteils eingeschraubt sind, um das Leitungsgehäuse gegen das erste hohle Strukturteil festzuschrauben.

Eine verstellbare Lagerung des Leitungsgehäuses bezüglich des zweiten hohlen Strukturteils kann im Falle eines drehbaren Gelenks des Roboterarms dadurch erfolgen, dass das Leitungsgehäuse mittels eines Drehlagers an dem zweiten hohlen Strukturteil gelagert ist. Ein solches Drehlager kann ausgebildet sein, vorrangig oder ausschließlich eine koaxiale Ausrichtung von Leitungsgehäuse und zweitem hohlen Strukturteil sicherzustellen. So fluchtet die Drehachse des Drehlagers insbesondere genau mit der Drehachse desjenigen Gelenks des Roboterarms, welches das erste hohle Strukturteil mit dem zweiten hohlen Strukturteil drehbar verbindet.

Das Leitungsgehäuse weist eine Gehäuseschale mit einer Eintrittsöffnung auf, über welche der aus dem ersten hohlen Strukturteil austretende Zwischenstrangabschnitt in das Leitungsgehäuse eintritt und die Gehäuseschale kann dabei eine Austrittsöffnung aufweisen, über welche der Zwischenstrangabschnitt aus dem Leitungsgehäuse austritt und dann in das zweite hohle Strukturteil eintritt, wobei die Gehäuseschale einen die Eintrittsöffnung umgebenden Flansch aufweist, der zum starren Befestigen der Gehäuseschale an dem ersten hohlen Strukturteil ausgebildet ist.

Das Leitungsgehäuse bzw. die Gehäuseschale kann ausgebildet sein, außer der Eintrittsöffnung, der Austrittsöffnung und gegebenenfalls einer optionalen Wartungsöffnung, die von einem Deckel verschlossen ist, keine sonstigen Öffnungen aufzuweisen. Ist die eine optionale Wartungsöffnung von dem Deckel verschlossen bzw. sind mehrere Wartungsöffnungen von einer entsprechenden Anzahl von Deckeln verschlossen, und die Eintrittsöffnung an das erste hohle Strukturteil abgedichtet angeschlossen und die Austrittsöffnung an das zweite hohle Strukturteil abgedichtet angeschlossen, dann ist der Zwischenstrangabschnitt durch das Leitungsgehäuse bzw. durch die Gehäuseschale gegen die Arbeitsumgebung des Roboters abgeschirmt, d.h. feste, flüssige und/oder gasförmige Stoffe aus der Arbeitsumgebung können nicht zu dem Zwischenstrangabschnitt vordringen. Die äußere Mantelwand des ersten hohlen Strukturteils, die äußere Mantelwand des zweiten hohlen Strukturteils und das Leitungsgehäuse bzw. die Gehäuseschale, gegebenenfalls mit den optionalen Deckeln begrenzen abgedichtet folglich eine außerhalb des Roboterarms angeordnete Hohlkammer, in welcher der Zwischenstrangabschnitt vor äußeren Einflüssen geschützt verläuft.

Der die Eintrittsöffnung umgebenden Flansch kann die starre Verbindung des Leitungsgehäuses mit dem ersten hohlen Strukturteil darstellen. Dieser Flansch kann lösbare Befestigungsmittel, insbesondere Schrauben umfassen, durch welche das Leitungsgehäuses mit dem ersten hohlen Strukturteil im Bereich der Eintrittsöffnung verbunden ist. Dabei kann das erste hohle Strukturteil an seiner äußeren Mantelwand eine die Eintrittsöffnung umgebende Flanschfläche aufweisen und das Leitungsgehäuse eine der Flanschfläche entsprechende, die Eintrittsöffnung umgebende Gegenflanschfläche aufweisen. Zwischen der Flanschfläche des ersten hohlen Strukturteils und der Gegenflanschfläche des Leitungsgehäuses kann eine Dichtung, insbesondere eine statische Dichtung eingefügt sein, welche die Eintrittsöffnung einfasst. Die Dichtung kann beispielsweise eine Flachdichtung aus elastischem Kunststoff oder Papier sein. Im Falle einer starren Verbindung von Leitungsgehäuses und erstem hohlen Strukturteil mittels Schrauben können beispielsweise der Flanschfläche des ersten hohlen Strukturteils mehrere, die Eintrittsöffnung umgebende Gewindebohrungen zugeordnet sein und der Gegenflanschfläche des Leitungsgehäuses eine entsprechende Anzahl von die Eintrittsöffnung umgebende Durchgangsbohrungen zugeordnet sein, wobei Schrauben durch die Durchgangsbohrungen des Leitungsgehäuses hindurch gesteckt sind, welche mit ihren Gewindeabschnitten in die Gewindebohrungen des ersten hohlen Strukturteils eingeschraubt sind, um das Leitungsgehäuse gegen das erste hohle Strukturteil festzuschrauben.

Die Austrittsöffnung kann eine Kreisöffnung sein, welche koaxial zur Drehachse des zugeordneten Gelenks angeordnet ist. Die Austrittsöffnung kann eine Kreisöffnung sein, welche außerdem koaxial zum Drehlager angeordnet ist, das vorrangig oder ausschließlich eine koaxiale Ausrichtung von Leitungsgehäuse und zweitem hohlen Strukturteil sicherstellt. Dabei kann die Drehachse des Drehlagers insbesondere genau mit der Drehachse desjenigen Gelenks des Roboterarms fluchten, welches das erste hohle Strukturteil mit dem zweiten hohlen Strukturteil drehbar verbindet. Die Austrittsöffnung kann den im Folgenden noch beschriebenen Ring aufweisen bzw. die Austrittsöffnung kann eine Kreisöffnung sein, welche koaxial zu diesem Ring angeordnet ist.

Die Gehäuseschale weist des Weiteren erfindungsgemäß einen um die Austrittsöffnung umlaufenden Ring auf, welcher Teil einer die Gehäuseschale am zweiten hohlen Strukturteil drehbar lagernden Lageranordnung des Roboterarms und/oder Teil einer die Gehäuseschale gegen das zweite hohle Strukturteil abdichtenden Dichtungsanordnung des Roboterarms bildet.

Der Ring kann einteilig mit der Gehäuseschale ausgebildet sein. Alternativ kann der Ring als separates Bauteil hergestellt und an der Gehäuseschale befestigt sein. Der Ring kann insbesondere aus Edelstahl hergestellt sein.

Der Ring kann eine Laufbahn aufweisen, auf der Wälzkörper einer die Gehäuseschale am zweiten hohlen Strukturteil drehbar lagernden Wälzlageranordnung des Roboterarms abwälzen. Die Laufbahn ist dabei Teil einer die Gehäuseschale am zweiten hohlen Strukturteil drehbar lagernden Wälzlageranordnung des Roboterarms. In einer solchen Ausführungsvariante kann der Ring insoweit einen Innenring eines Wälzlagers bilden. Die Wälzkörper können Wälznadeln, Wälzrollen oder Wälzkugeln sein. Die Wälzkörper können in einem Wälzlagerkäfig angeordnet und in einer Nut des zweiten hohlen Strukturteils geführt sein. Die Wälzlageranordnung kann insbesondere ausgebildet sein, vorrangig oder ausschließlich eine koaxiale Ausrichtung von Leitungsgehäuse bzw. Gehäuseschale und zweitem hohlen Strukturteil sicherzustellen.

Alternativ oder ergänzend zu einer Laufbahn kann der Ring eine Gleitbahn aufweisen, auf der ein im zweiten hohlen Strukturteil gelagertes Führungsband einer die Gehäuseschale am zweiten hohlen Strukturteil drehbar lagernden Gleitlageranordnung des Roboterarms läuft. Die Gleitbahn ist dabei Teil einer die Gehäuseschale am zweiten hohlen Strukturteil drehbar lagernden Gleitlageranordnung des Roboterarms. Das Führungsband kann in einer Nut des zweiten hohlen Strukturteils geführt sein. Das Führungsband kann insbesondere ausgebildet sein, vorrangig oder ausschließlich eine koaxiale Ausrichtung von Leitungsgehäuse bzw. Gehäuseschale und zweitem hohlen Strukturteil sicherzustellen.

Alternativ oder ergänzend zu einer Laufbahn und/oder einer Gleitbahn kann der Ring eine Dichtungsbahn aufweisen, auf der eine Dichtlippe einer die Gehäuseschale gegen das zweite hohle Strukturteil abdichtenden Dichtungsanordnung des Roboterarms anliegt. Die Dichtungsbahn ist dabei Teil einer die Gehäuseschale gegen das zweite hohle Strukturteil abdichtenden Dichtungsanordnung des Roboterarms. Die Dichtungsanordnung kann einen im zweite hohle Strukturteil festgelegten Radialwellendichtring aufweisen, der eine dynamische Dichtlippe aufweist, dessen Dichtungskante auf der Laufbahn anliegt, um das Leitungsgehäuse bzw. die Gehäuseschale gegen das zweite hohle Strukturteil abzudichten. Alternativ zu einem Radialwellendichtring kann die Dichtungsanordnung einen in einer Nut des zweiten hohlen Strukturteils eingesetzten O-Ring aufweisen, welcher um ein Dichtlippenband geführt ist, das wenigstens eine, insbesondere drei Dichtlippen aufweist, die auf der Laufbahn anliegen, um das Leitungsgehäuse bzw. die Gehäuseschale gegen das zweite hohle Strukturteil abzudichten.

In allen Ausführungsvarianten kann das Leitungsgehäuse, insbesondere die Gehäuseschale eine Wartungsöffnung und einen die Wartungsöffnung verschließenden, demontierbaren Deckel aufweisen.

Über die Wartungsöffnung kann der Energieleitungsstrang, insbesondere der Zwischenstrangabschnitt montiert, demontiert und/oder installiert bzw. repariert werden. Der Deckel kann lösbar an dem Leitungsgehäuse, insbesondere lösbar an der Gehäuseschale befestigt sein, beispielsweise mittels Schrauben. Der Deckel kann als ein Tiefziehteil, ein Metallgussteil, insbesondere ein Aluminiumgussteil, oder als ein Kunststoffspritzgussteil hergestellt sein kann. Der Deckel kann insbesondere derart gestaltet sein, dass er resistent ist gegen die einwirkenden Stoffe der Arbeitsumgebung, wie die genannten Stäube, und/oder Flüssigkeiten, wie beispielsweise Wasser, Reinigungsmittel oder Lösungsmittel, und/oder gasförmige Stoffe, aber insbesondere aus Kostengründen nur eine maximale Festigkeit aufweist, die nicht geeignet ist, als ein tragendes Strukturteil dienen zu können.

Erfindungsgemäß weist der Energieleitungsstrang zusätzlich einen den Zwischenstrangabschnitt einfassenden Schutzschlauch auf.

Der Energieleitungsstrang kann aus mehreren Einzelleitungen zusammengestellt sein, die innerhalb des Schutzschlauches zusammengefasst sein können. Der Schutzschlauch kann beispielsweise ein Wellschlauch aus Kunststoff sein.

Der Schutzschlauch weist ein erstes Schutzschlauchende auf, und die Gehäuseschale weist erfindungsgemäß außerdem dabei ein Drehlager auf, das ausgebildet ist, das erste Schutzschlauchende drehbar an an der Gehäuseschale zu lagern.

Das Drehlager kann dazu einen am Leitungsgehäuse bzw. an der Gehäuseschale befestigten Lagersitz aufweisen, in dem das erste Schutzschlauchende drehbar gelagert ist. Der Lagersitz kann an einer Blechbuchse ausgebildet sein, die einen Befestigungsabschnitt aufweist und einen Ringabschnitt aufweist, der den Lagersitz aufweist. Der Befestigungsabschnitt kann wenigstens ein Loch aufweisen, durch das eine Schraube hindurchgeführt ist, welche die Blechbuchse an dem Leitungsgehäuse bzw. an der Gehäuseschale befestigt. Der Ringabschnitt kann an einer nach innen weisenden Mantelwand wenigstens einen Ringvorsprung aufweisen, der ausgebildet sein kann, in Rippen des ersten Schutzschlauchendes drehbar, aber in axialer Richtung fest, einzugreifen.

Der Schutzschlauch kann ein zweites Schutzschlauchende aufweisen, und das erste hohle Strukturteil oder das zweite hohle Strukturteil kann dabei eine Klemmschelle aufweisen, die ausgebildet ist, das zweite Schutzschlauchende starr an dem ersten hohlen Strukturteil bzw. dem zweiten hohlen Strukturteil zu befestigen.

Die Klemmschelle kann dazu ein am zweiten hohlen Strukturteil befestigte Blechlasche aufweisen, an der das zweite Schutzschlauchende starr befestigt ist. Die Blechlasche kann einen Befestigungsabschnitt aufweisen und eine teilbare Ringschelle aufweisen, an der das zweite Schutzschlauchende festgeklemmt ist. Der Befestigungsabschnitt kann wenigstens ein Loch aufweisen, durch das eine Schraube hindurchgeführt ist, welche die Klemmschelle am zweiten hohlen Strukturteil befestigt. Die teilbare Ringschelle kann einen schwenkbaren Bügel aufweisen, der ausgebildet sein kann, das zweite Schutzschlauchende drehfest und in axialer Richtung fest einzuspannen.

Der erste Strangabschnitt des Energieleitungsstrangs kann von Einzelleitungen gebildet werden, und jede Einzelleitung kann dabei mittels einer ersten Leitungsklemmeinrichtung in dem ersten hohlen Strukturteil separat befestigt sein.

Alternativ oder ergänzend kann der zweite Strangabschnitt des Energieleitungsstrangs von Einzelleitungen gebildet werden, und jede Einzelleitung kann dabei mittels einer zweiten Leitungsklemmeinrichtung in dem zweiten hohlen Strukturteil separat befestigt sein.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine perspektivische Ansicht eines beispielhaften Roboters mit einem Roboterarm;
- Fig. 2: eine Schnittdarstellung durch einen Roboterarm gemäß Fig. 1 im Bereich desjenigen Gelenks, welches die Schwinge mit dem Armausleger drehbar verbindet, zusammen mit einem dortigen Zwischenstrangabschnitt eines beispielhaften Energieleitungsstrangs und einem erfindungsgemäßen Leitungsgehäuse;
- Fig. 3: eine Teilschnittansicht durch eine erste Ausführungsvariante einer drehbaren Lagerung des Leitungsgehäuses an dem zweiten hohlen Strukturteil mit Wälzkörpern und einem Radialwellendichtring;
- Fig. 4: eine Teilschnittansicht durch eine zweite Ausführungsvariante einer drehbaren Lagerung des Leitungsgehäuses an dem zweiten hohlen Strukturteil mit einem Führungsband und einer O-Ringdichtung;
- Fig. 5: eine Teilschnittansicht durch eine beispielhafte Ausführung einer drehbaren Lagerung eines den Zwischenstrangabschnitt einfassenden Schutzschlauches an dem ersten hohlen Strukturteil; und
- Fig. 6: eine Teilschnittansicht durch eine beispielhafte Ausführung einer Befestigung eines den Zwischenstrangabschnitt einfassenden Schutzschlauches an dem zweiten hohlen Strukturteil.

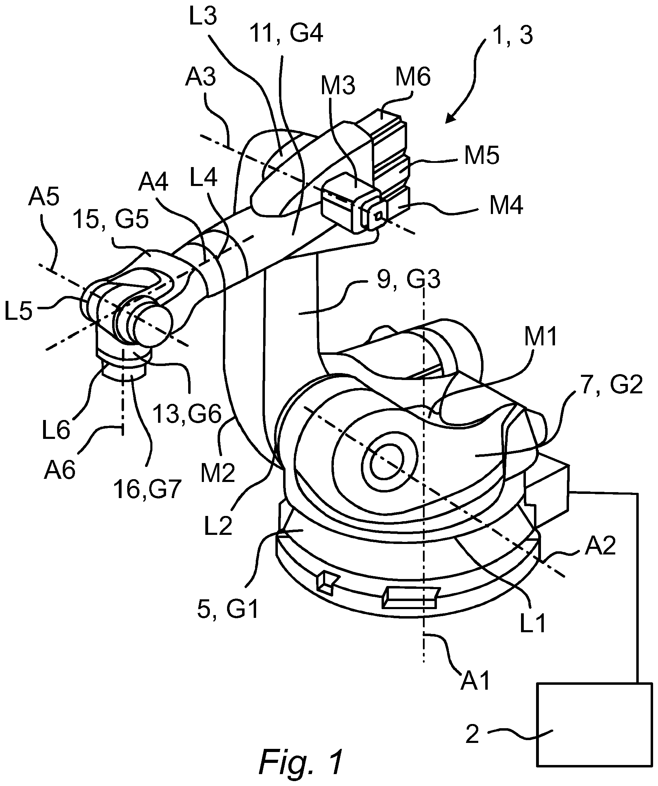

Die Fig. 1 zeigt einen Roboter 1 mit einer Robotersteuerung 2 und einem Roboterarm 3. Der Roboterarm 3 weist ein Grundgestell 5 als erstes Glied G1 auf, an dem ein Karussell 7 als zweites Glied G2 um eine erste vertikale Achse A1 drehbar gelagert und mittels eines ersten Antriebsmotors M1 drehangetrieben ist. Die Achsen A1-A6 des Roboterarms 3 können auch als Gelenke L1-L6 des Roboterarms 3 bezeichnet werden. An dem Karussell 7 ist eine Schwinge 9 als drittes Glied G3 um eine zweite horizontale Achse A2 auf und ab schwenkbar gelagert und mittels eines zweiten Antriebsmotors M2 drehangetrieben. Die Schwinge 9 trägt einen Armausleger 11, der um eine dritte horizontale Achse A3 auf und ab schwenkbar gelagert und mittels eines dritten Antriebsmotors M3 drehangetrieben ist. An dem Armausleger 11, dessen Grundarm ein viertes Glied G4 bildet, ist eine vierte Achse A4 vorgesehen, welche in Längserstreckung des Armauslegers 11 verläuft und über einen vierten Antriebsmotors M4 eine Hand 15, die einen Vorderarm des Armauslegers 11 bildet und ein fünftes Glied G5 darstellt, drehantreibt. Von der Hand 15 erstrecken sich ein erster Schenkel und ein zweiter Schenkel gabelförmig nach vorne. Die beiden Schenkel tragen eine Lagerung für ein freies Ende 13 der Hand 15, das ein sechstes Glied G6 bildet. Die Lagerung definiert eine fünfte Achse A5 des Roboterarms 3, um welche die Hand 15 mittels eines fünften Antriebsmotors M5 schwenkbar bewegt werden kann. Ergänzend weist die Hand 15 eine sechste Achse A6 auf, um einen Befestigungsflansch 16, der ein siebtes Glied G7 bildet, mittels eines sechsten Antriebsmotors M6 drehbar antreiben zu können. Jeder Achse A1 bis A6 ist ein Gelenk L1 bis L6 zugeordnet, welche Gelenk L1 bis L6 im Falle des gezeigten Ausführungsbeispiels in Art einer seriellen Kinematik die Glieder G1 bis G7 verbinden.

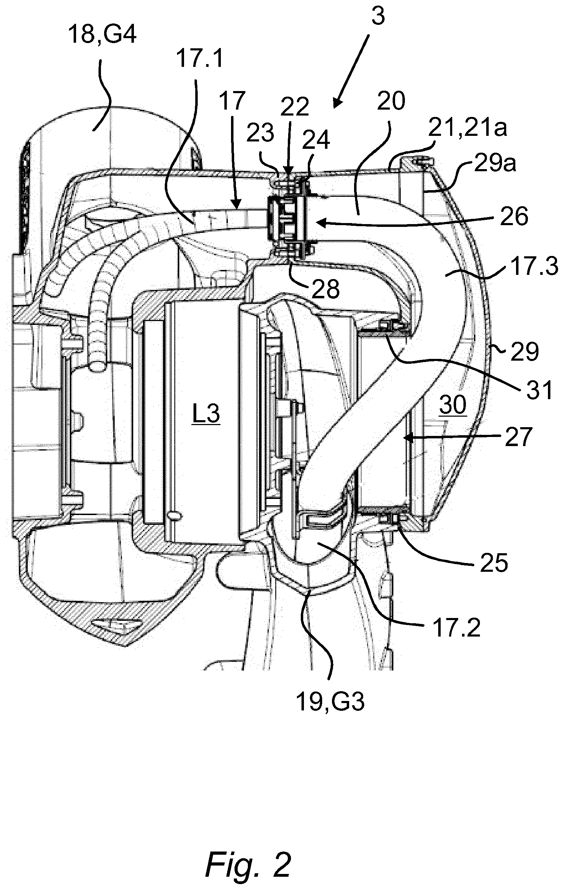

Die Fig. 2 zeigt einen Teil eines Energieleitungsstrangs 17 des Roboterarms 3, der ausgebildet ist, Antriebsenergie an den wenigstens einen Antriebsmotor M1-M6 zu übertragen. Der Energieleitungsstrang 17 weist einen zwischen einem ersten Strangabschnitt 17.1 des Energieleitungsstrangs 17 und einem zweiten Strangabschnitt 17.2 des Energieleitungsstrangs 17 verlaufenden Zwischenstrangabschnitt 17.3 auf, der außerhalb eines ersten hohlen Strukturteils 18 und außerhalb eines zweiten hohlen Strukturteils 19 verläuft. Zumindest der Zwischenstrangabschnitt 17.3 ist im Falle des vorliegenden Ausführungsbeispiels mit einem Schutzschlauch 20 versehen.

Der Zwischenstrangabschnitt 17.3 ist erfindungsgemäß in einem Leitungsgehäuse 21 eingeschlossen.

Im Folgenden wird das Leitungsgehäuse 21 für einen einzelnen Zwischenstrangabschnitt 17.3 zwischen einem repräsentativen ersten Glied G4 bzw. dem ersten hohlen Strukturteil 18 und einem repräsentativen zweiten Glied G3 bzw. dem zweiten hohlen Strukturteil 19 beschrieben. Das erste Glied und das zweite Glied können jedoch unabhängig ihrer verwendeten Nummerierung von beliebigen, insbesondere unmittelbar benachbarten beliebigen Gliedern G1-G7 des Roboterarms 3 gebildet werden und insoweit in anderen Ausführungsformen als der gezeigten bei mehreren Leitungsgehäusen an einem einzigen Roboterarm 3 auch mehrfach auftreten.

Auch wenn die Glieder G1-G7 des Roboterarms 3 als hohle Strukturteile 18, 19 ausgebildet sind, kann es beispielsweise aufgrund der Bauart der Gelenke L1-L6, der Konstruktion von Getrieben und der Anordnung der Antriebsmotoren M1-M6 zweckmäßig oder sogar erforderlich sein, dass ein innerhalb eines der hohlen Glieder G1-G7 geführter Energieleitungsstrang 17 im Bereich eines oder mehrerer der Gelenke L1-L6, wie repräsentativ in Fig. 2 gezeigt, des Roboterarms 3 aus einem ersten Glied, d.h. aus einem ersten hohlen Strukturteil 18 herausgeführt wird, außerhalb der Glieder G1-G7 bzw. außerhalb der hohlen Strukturteile 18, 19 um das betreffende Gelenk herumgeführt wird und anschließend in das unmittelbar folgende zweite Glied, d.h. in das zweite hohle Strukturteil 19 wieder eingeleitet wird.

Bei einer solchen Bauart liegt dann der Zwischenabschnitt 17.3 des Energieleitungsstrangs 17 weitgehend ungeschützt au-βerhalb des Roboterarms 3. Indem der Roboterarm 3 erfindungsgemäß das den Zwischenstrangabschnitt 17.3 einschließendes Leitungsgehäuse 21 aufweist, kann der Zwischenabschnitt 17.3 oder des Energieleitungsstrangs 17 besonders gut gegen äußere Einflüsse der Arbeitsumgebung des Roboters 1 geschützt werden. Das Leitungsgehäuse 21 ist einerseits mit dem ersten hohlen Strukturteil 18 starr verbunden und ist andererseits relativ zum zweiten hohle Strukturteil 19 verstellbar gelagert.

Eine starre Verbindung des Leitungsgehäuses 21 mit dem ersten hohlen Strukturteil 18 erfolgt im Falle des dargestellten Ausführungsbeispiels mittels einer Flanschverbindung 22. Die Flanschverbindung 22 umfasst in diesem gezeigten Falle lösbare Befestigungsmittel 24, insbesondere Schrauben, durch welche das Leitungsgehäuse 21 mit dem ersten hohlen Strukturteil 18 verbunden ist. Dabei kann das erste hohle Strukturteil 18 an seiner äußeren Mantelwand eine Flanschfläche 23 aufweisen und das Leitungsgehäuse 21 eine der Flanschfläche 23 entsprechende Gegenflanschfläche aufweisen.

Eine verstellbare Lagerung des Leitungsgehäuses 21 bezüglich des zweiten hohlen Strukturteils 19 erfolgt im Falle des dargestellten Ausführungsbeispiels indem das Leitungsgehäuse 21 mittels eines Drehlagers 25 an dem zweiten hohlen Strukturteil 19 gelagert ist. Ein solches Drehlager 25 kann ausgebildet sein, vorrangig oder ausschließlich eine koaxiale Ausrichtung von Leitungsgehäuse 21 und zweitem hohlen Strukturteil 19 sicherzustellen. So fluchtet die Drehachse des Drehlagers 25 insbesondere genau mit der Drehachse desjenigen Gelenks L3 des Roboterarms 3, welches das erste hohle Strukturteil 18 mit dem zweiten hohlen Strukturteil 19 drehbar verbindet.

Das Leitungsgehäuse 21 weist eine Gehäuseschale 21a mit einer Eintrittsöffnung 26 auf, über welche der aus dem ersten hohlen Strukturteil 18 austretende Zwischenstrangabschnitt 17.3 in das Leitungsgehäuse 21 eintritt. Darüber hinaus weist die Gehäuseschale 21a eine Austrittsöffnung 27 auf, über welche der Zwischenstrangabschnitt 17.3 aus dem Leitungsgehäuse 21 austritt und dann in das zweite hohle Strukturteil 19 eintritt, wobei die Gehäuseschale 21a einen die Eintrittsöffnung 26 umgebenden Flansch 28 aufweist, der zum starren Befestigen der Gehäuseschale 21a an dem ersten hohlen Strukturteil 18 ausgebildet ist.

Die äußere Mantelwand des ersten hohlen Strukturteils 18, die äußere Mantelwand des zweiten hohlen Strukturteils 19 und das Leitungsgehäuse 21 bzw. die Gehäuseschale 21a begrenzen mit einem Deckel 29 abgedichtet eine außerhalb des Roboterarms 3 angeordnete Hohlkammer 30, in welcher der Zwischenstrangabschnitt 17.3 vor äußeren Einflüssen geschützt verläuft. Der Deckel 29 verschließt eine Wartungsöffnung 29a des Leitungsgehäuses 21 bzw. der Gehäuseschale 21a.

Der die Eintrittsöffnung 26 umgebenden Flansch 28 stellt im Falle des vorliegenden Ausführungsbeispiels die starre Verbindung des Leitungsgehäuses 21 mit dem ersten hohlen Strukturteil 18 dar. Dieser Flansch 28 weist die lösbaren Befestigungsmittel 24 auf, insbesondere die Schrauben auf, durch welche das Leitungsgehäuses 21 mit dem ersten hohlen Strukturteil 18 im Bereich der Eintrittsöffnung 26 verbunden ist. Dabei kann das erste hohle Strukturteil 18 an seiner äußeren Mantelwand die die Eintrittsöffnung 26 umgebende Flanschfläche 23 aufweisen und das Leitungsgehäuse 21 eine der Flanschfläche 23 entsprechende, die Eintrittsöffnung 26 umgebende Gegenflanschfläche aufweisen.

Die Austrittsöffnung 27 ist im Falle des vorliegenden Ausführungsbeispiels eine Kreisöffnung, welche koaxial zur Drehachse des zugeordneten Gelenks L3 angeordnet ist. Die Austrittsöffnung 27 ist eine Kreisöffnung, welche koaxial zum Drehlager 25 angeordnet ist, das vorrangig oder ausschließlich eine koaxiale Ausrichtung von Leitungsgehäuse 21 und zweitem hohlen Strukturteil 19 sicherstellt. Dabei fluchtet die Drehachse des Drehlagers 25 insbesondere genau mit der Drehachse desjenigen Gelenks L3 des Roboterarms 3, welches das erste hohle Strukturteil 18 mit dem zweiten hohlen Strukturteil 19 drehbar verbindet. Die Austrittsöffnung 27 kann den im Folgenden noch beschriebenen Ring 31 aufweisen bzw. die Austrittsöffnung 27 kann eine Kreisöffnung sein, welche koaxial zu diesem Ring 31 angeordnet ist.

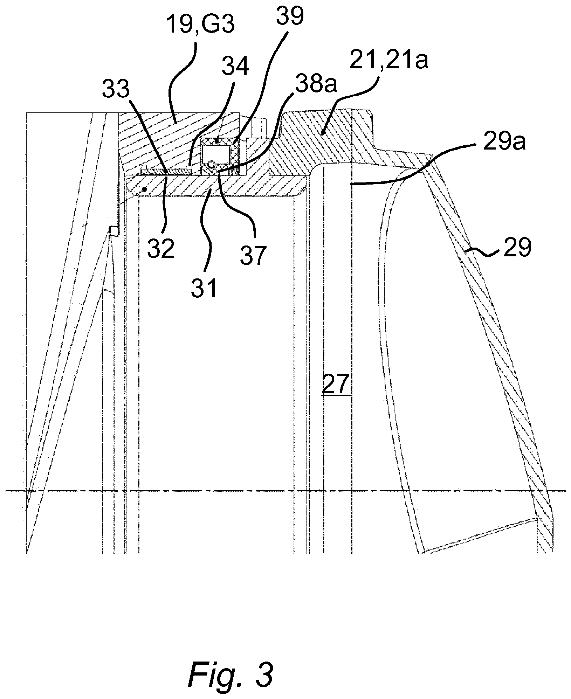

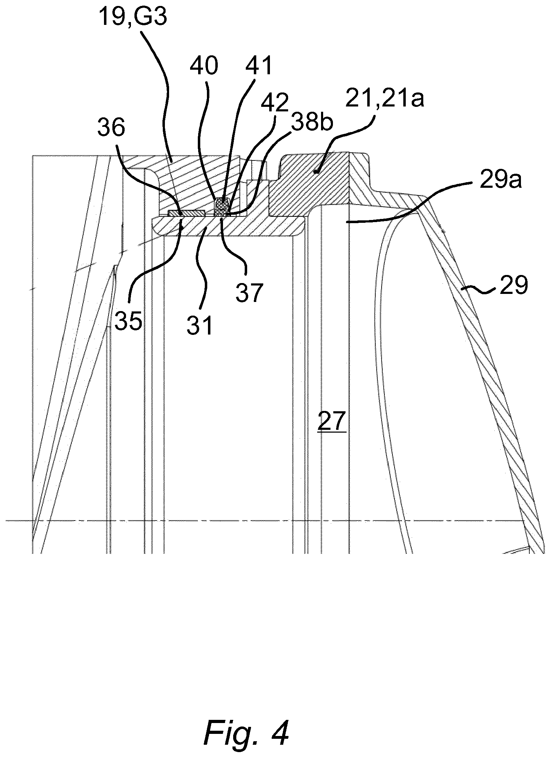

Die Fig. 3 und Fig. 4 zeigen Varianten bei denen die Gehäuseschale 21a einen um die Austrittsöffnung 27 umlaufenden Ring 31 aufweist, welcher Teil einer die Gehäuseschale 21a am zweiten hohlen Strukturteil 19 drehbar lagernden Lageranordnung des Roboterarms 3 und gleichzeitig Teil einer die Gehäuseschale 21a gegen das zweite hohle Strukturteil 19 abdichtenden Dichtungsanordnung des Roboterarms 3 bildet.

Der Ring 31 ist im Falle der gezeigten Varianten als separates Bauteil hergestellt und an der Gehäuseschale 21a befestigt. Der Ring 31 weist gemäß der Variante nach Fig. 3 eine Laufbahn 32 auf, auf der Wälzkörper 33 einer die Gehäuseschale 21a am zweiten hohlen Strukturteil 19 drehbar lagernden Wälzlageranordnung des Roboterarms 3 abwälzen.

Die Wälzkörper 33 sind in einer Nut 34 des zweiten hohlen Strukturteils 19 geführt. Die Wälzlageranordnung ist insbesondere ausgebildet, vorrangig oder ausschließlich eine koaxiale Ausrichtung von Leitungsgehäuse 21 bzw. Gehäuseschale 21a und zweitem hohlen Strukturteil 19 sicherzustellen.

Der Ring 31 weist gemäß der Variante nach Fig. 4 alternativ zu Wälzkörper 33 eine Gleitbahn 35 auf, auf der ein im zweiten hohlen Strukturteil 19 gelagertes Führungsband 36 einer die Gehäuseschale 21a am zweiten hohlen Strukturteil 19 drehbar lagernden Gleitlageranordnung des Roboterarms 3 läuft.

Der Ring 31 weist außerdem in beiden Varianten eine Dichtungsbahn 37 auf, auf der eine Dichtlippe 38a, 38b einer die Gehäuseschale 21a gegen das zweite hohle Strukturteil 19 abdichtenden Dichtungsanordnung des Roboterarms 3 anliegt.

Die Dichtungsanordnung kann einen im zweite hohle Strukturteil 19 festgelegten Radialwellendichtring 39 aufweisen, der eine dynamische Dichtlippe 38a aufweist, dessen Dichtungskante auf der Dichtungsbahn 37 anliegt, um das Leitungsgehäuse 21 bzw. die Gehäuseschale 21a gegen das zweite hohle Strukturteil 19 abzudichten.

Alternativ zu einem Radialwellendichtring 39 weist in der Variante gemäß Fig. 4 die Dichtungsanordnung einen in einer Nut 40 des zweiten hohlen Strukturteils 19 eingesetzten O-Ring 41 auf, welcher um ein Dichtlippenband 42 geführt ist, das wenigstens eine, insbesondere drei Dichtlippen 38b aufweist, die auf der Dichtungsbahn 37 anliegen, um das Leitungsgehäuse 21 bzw. die Gehäuseschale 21a gegen das zweite hohle Strukturteil 19 abzudichten.

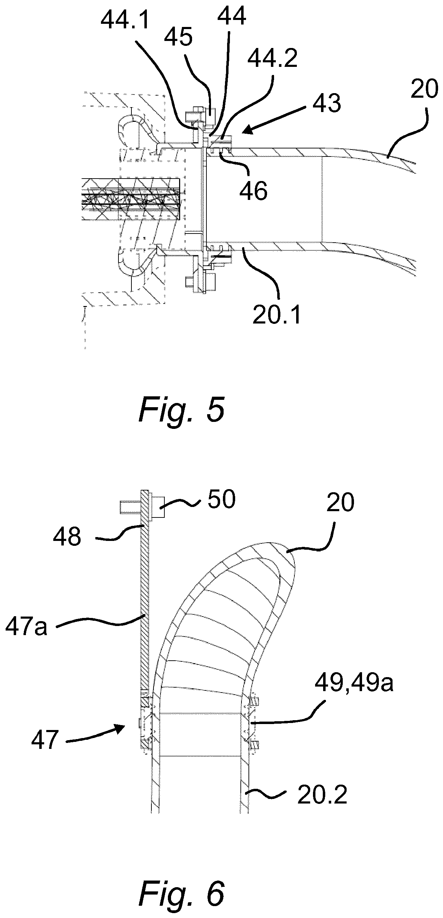

Die Fig. 5 zeigt eine Ausführungsform, bei welcher der Schutzschlauch 20 ein erstes Schutzschlauchende 20.1 aufweist, und das Leitungsgehäuse 21, insbesondere die Gehäuseschale 21a ein Drehlager 43 aufweist, das ausgebildet ist, das erste Schutzschlauchende 20.1 drehbar an dem Leitungsgehäuse 21, insbesondere an der Gehäuseschale 21a zu lagern.

Das Drehlager 43 weist im Falle des gezeigten Ausführungsbeispiels einen am Leitungsgehäuse 21 bzw. an der Gehäuseschale 21a befestigten Lagersitz 44 auf, in dem das erste Schutzschlauchende 20.1 drehbar gelagert ist. Der Lagersitz 44 ist als eine Blechbuchse ausgebildet, die einen Befestigungsabschnitt 44.1 aufweist und einen Ringabschnitt 44.2 aufweist, der den Lagersitz bildet. Der Befestigungsabschnitt 44.1 weist Löcher auf, durch die Schrauben 45 hindurchgeführt sind, welche die Blechbuchse an dem Leitungsgehäuse 21 bzw. an der Gehäuseschale 21a befestigen. Der Ringabschnitt 44.2 kann an einer nach innen weisenden Mantelwand wenigstens einen Ringvorsprung aufweisen, der ausgebildet ist, in Rippen 46 des ersten Schutzschlauchendes 20.1 drehbar, aber in axialer Richtung fest, einzugreifen.

Die Fig. 6 zeigt eine Ausführungsform, bei welcher der Schutzschlauch 20 ein zweites Schutzschlauchende 20.2 aufweist, und eine Klemmschelle 47 vorgesehen ist, die ausgebildet ist, das zweite Schutzschlauchende 20.2 starr an dem ersten hohlen Strukturteil 18 bzw. dem zweiten hohlen Strukturteil 19 zu befestigen.

Die Klemmschelle 47 weist im Falle des vorliegenden Ausführungsbeispiels eine Blechlasche 47a auf, an der das zweite Schutzschlauchende 20.2 starr befestigt ist. Die Blechlasche 47a kann einen Befestigungsabschnitt 48 aufweisen und eine teilbare Ringschelle 49 aufweisen, an der das zweite Schutzschlauchende 20.2 festgeklemmt ist. Der Befestigungsabschnitt 48 weist wenigstens ein Loch auf, durch das eine Schraube 50 hindurchgeführt ist, welche die Klemmschelle 47 am zweiten hohlen Strukturteil 19 befestigt. Die teilbare Ringschelle 49 kann einen schwenkbaren Bügel 49a aufweisen, der ausgebildet ist, das zweite Schutzschlauchende 20.2 drehfest und in axialer Richtung fest einzuspannen.

## Patentansprüche

1. Roboter, aufweisend einen Roboterarm (3) mit mehreren durch Glieder (G1-G7) verbundenen Gelenken (L1-L6), die von Antriebsmotoren (M1-M6) des Roboters (1), welche an die Gelenke (L1-L6) angekoppelt sind, gemäß eines Roboterprogramms automatisiert oder in einem Handfahrbetrieb des Roboters (1) antriebsgesteuert verstellbar sind, um die Konfiguration des Roboterarms (3) zu verändern, wobei ein erstes Glied (G1-G7) mit einem zweiten Glied (G1-G7) durch wenigstens ein Gelenk (L1-L6) verbunden ist, über das ein Energieleitungsstrang (17) des Roboterarms (3), der ausgebildet ist, Antriebsenergie an den wenigstens einen Antriebsmotor (M1-M6) zu übertragen, hinweggeführt ist, wobei:
- das erste Glied (G1-G7) ein erstes hohles Strukturteil (18) aufweist, innerhalb dem ein erster Strangabschnitt (17.1) des Energieleitungsstrangs (17) geführt ist,
- das zweite Glied (G1-G7) ein zweites hohles Strukturteil (19) aufweist, innerhalb dem ein zweiter Strangabschnitt (17.2) des Energieleitungsstrangs (17) geführt ist,
- der Energieleitungsstrang (17) einen zwischen dem ersten Strangabschnitt (17.1) des Energieleitungsstrangs (17) und dem zweiten Strangabschnitt (17.2) des Energieleitungsstrangs (17) verlaufenden Zwischenstrangabschnitt (17.3) aufweist, der außerhalb des ersten hohlen Strukturteils (18) und außerhalb des zweiten hohlen Strukturteils verläuft (19),
- der Roboterarm (3) ein den Zwischenstrangabschnitt (17.3) einschließendes Leitungsgehäuse (21) aufweist, und
- das Leitungsgehäuse (21) einerseits mit dem ersten hohlen Strukturteil (18) starr verbunden ist und andererseits relativ zum zweiten hohlen Strukturteil (19) verstellbar gelagert ist,
wobei das Leitungsgehäuse (21) eine Gehäuseschale (21a) mit einer Eintrittsöffnung (26) aufweist, über welche der aus dem ersten hohlen Strukturteil (18) austretende Zwischenstrangabschnitt (17.3) in das Leitungsgehäuse (21) eintritt und die Gehäuseschale (21a) eine Austrittsöffnung (27) aufweist, über welche der Zwischenstrangabschnitt (17.3) aus dem Leitungsgehäuse (21) austritt und dann in das zweite hohle Strukturteil (19) eintritt, wobei die Gehäuseschale (21a) einen die Eintrittsöffnung (26) umgebenden Flansch (28) aufweist, der zum starren Befestigen der Gehäuseschale (21a) an dem ersten hohlen Strukturteil (18) ausgebildet ist, und die Gehäuseschale (21a) einen um die Austrittsöffnung (27) umlaufenden Ring (31) aufweist, welcher Teil einer die Gehäuseschale (21a) am zweiten hohlen Strukturteil (19) drehbar lagernden Lageranordnung des Roboterarms (3) und/oder Teil einer die Gehäuseschale (21a) gegen das zweite hohle Strukturteil (19) abdichtenden Dichtungsanordnung des Roboterarms (3) bildet, und wobei der Energieleitungsstrang (17) einen den Zwischenstrangabschnitt (17.3) einfassenden Schutzschlauch (20) aufweist, der ein erstes Schutzschlauchende (20.1) aufweist, und die Gehäuseschale (21a) ein Drehlager (43) aufweist, das ausgebildet ist, das erste Schutzschlauchende (20.1) drehbar an der Gehäuseschale (21a) zu lagern.

2. Roboter nach Anspruch 1, **dadurch gekennzeichnet, dass** der Ring (31) eine Laufbahn (32) aufweist, auf der Wälzkörper (33) einer die Gehäuseschale (21a) am zweiten hohlen Strukturteil (19) drehbar lagernden Wälzlageranordnung des Roboterarms (3) abwälzen.

3. Roboter nach Anspruch 1, **dadurch gekennzeichnet, dass** der Ring (31) eine Gleitbahn (35) aufweist, auf der ein im zweiten hohlen Strukturteil (19) gelagertes Führungsband (36) einer die Gehäuseschale (21a) am zweiten hohlen Strukturteil (19) drehbar lagernden Gleitlageranordnung des Roboterarms (3) läuft.

4. Roboter nach Anspruch 1, **dadurch gekennzeichnet, dass** der Ring (31) eine Dichtungsbahn (37) aufweist, auf der eine Dichtlippe (38a, 38b) einer die Gehäuseschale (21a) gegen das zweite hohle Strukturteil (19) abdichtenden Dichtungsanordnung des Roboterarms (3) anliegt.

5. Roboter nach einem der Ansprüche 1 bis 4, **dadurch gekennzeichnet, dass** das Leitungsgehäuse (21), insbesondere die Gehäuseschale (21a) eine Wartungsöffnung (29a) und einen die Wartungsöffnung (29a) verschließenden, demontierbaren Deckel (29) aufweist.

6. Roboter nach einem der Ansprüche 1 bis 5, **dadurch gekennzeichnet, dass** der Schutzschlauch (20) ein zweites Schutzschlauchende (20.2) aufweist, und das erste hohle Strukturteil (18) oder das zweite hohle Strukturteil (19) eine Klemmschelle (47) aufweist, die ausgebildet ist, das zweite Schutzschlauchende (20.2) starr an dem ersten hohlen Strukturteil (18) bzw. dem zweiten hohlen Strukturteil (19) zu befestigen.

7. Roboter nach einem der Ansprüche 1 bis 6, **dadurch gekennzeichnet, dass** der erste Strangabschnitt (17.1) des Energieleitungsstrangs (17) von Einzelleitungen gebildet wird, und jede Einzelleitung mittels einer ersten Leitungsklemmeinrichtung in dem ersten hohlen Strukturteil (18) separat befestigt ist.

8. Roboter nach einem der Ansprüche 1 bis 7, **dadurch gekennzeichnet, dass** der zweite Strangabschnitt (17.2) des Energieleitungsstrangs (17) von Einzelleitungen gebildet wird, und jede Einzelleitung mittels einer zweiten Leitungsklemmeinrichtung in dem zweiten hohlen Strukturteil (19) separat befestigt ist.

## Claims

1. A robot comprising a robot arm (3) having a plurality of joints (L1-L6) connected by links (G1-G7), the joints (L1-L6) being adjustable by drive motors (M1-M6) of the robot (1), which are coupled to the joints (L1-L6), in an automated manner according to a robot program or in a drive-controlled manner in a manual travel mode of the robot (1), to change the configuration of the robot arm (3), wherein a first link (G1-G7) is connected to a second link (G1-G7) by at least one joint (L1-L6) over which a power line strand (17) of the robot arm (3) is routed which is adapted to transmit drive energy to the at least one drive motor (M1-M6), wherein:
- the first link (G1-G7) comprises a first hollow structural member (18) within which a first strand section (17.1) of the power line strand (17) is guided,
- the second link (G1-G7) comprises a second hollow structural member (19) within which a second strand section (17.2) of the power line strand (17) is guided,
- the power line strand (17) comprises an intermediate strand section (17.3) extending between the first strand section (17.1) of the power line strand (17) and the second strand section (17.2) of the power line strand (17), the intermediate strand section (17.3) extending outside the first hollow structural part (18) and outside the second hollow structural part (19),
- the robot arm (3) comprises a line housing (21) enclosing the intermediate strand section (17.3), and
- on the one hand the line housing (21) is rigidly connected to the first hollow structural part (18) and on the other hand the line housing (21) is adjustably mounted relative to the second hollow structural part (19), whereby the line housing (21) has a housing shell (21a) with an inlet opening (26) through which the intermediate strand section (17.3) emerging from the first hollow structural part (18) enters the line housing (21), and the housing shell (21a) has an outlet opening (27) through which the intermediate strand section (17.3) emerges from the line housing (21) and then enters the second hollow structural part (19), wherein the housing shell (21a) has a flange (28) surrounding the inlet opening (26), which flange is designed for rigidly fastening the housing shell (21a) to the first hollow structural part (18), and the housing shell (21a) has a ring (31) surrounding the outlet opening (27), which forms part of a bearing arrangement of the robot arm (3) rotatably supporting the housing shell (21a) on the second hollow structural part (19) and/or forms part of a sealing arrangement of the robot arm (3) sealing the housing shell (21a) against the second hollow structural part (19), and whereby the power line strand (17) comprises a protective hose (20) enclosing the intermediate strand section (17.3) and having a first protective hose end (20.1), and the housing shell (21a) comprises a pivot bearing (43) configured to rotatably support the first protective hose end (20.1) on the housing shell (21a).

2. Robot according to claim 1, **characterized in that** the ring (31) has a raceway (32) on which rolling elements (33) of a rolling bearing arrangement of the robot arm (3) roll for rotatably supporting the housing shell (21a) on the second hollow structural part (19).

3. Robot according to claim 1, **characterized in that** the ring (31) has a slideway (35) on which a guide band (36) runs, which is mounted in the second hollow structural part (19), and which is part of a slide bearing arrangement of the robot arm (3) rotatably mounting the housing shell (21a) on the second hollow structural part (19).

4. Robot according to claim 1, **characterized in that** the ring (31) has a sealing track (37) on which a sealing lip (38a, 38b) of a sealing arrangement of the robot arm (3) rests, for sealing the housing shell (21a) against the second hollow structural part (19).

5. Robot according to one of claims 1 to 4, **characterized in that** the line housing (21), in particular the housing shell (21a), comprises a maintenance opening (29a) and a removable cover (29) closing the maintenance opening (29a).

6. Robot according to one of claims 1 to 5, **characterized in that** the protective hose (20) has a second protective hose end (20.2), and the first hollow structural part (18) or the second hollow structural part (19) comprises a clamp (47) which is designed to fasten the second protective hose end (20.2) rigidly to the first hollow structural part (18) or the second hollow structural part (19), respectively.

7. Robot according to one of claims 1 to 6, **characterized in that** the first strand section (17.1) of the power line strand (17) is formed by individual lines, and each individual line is separately fixed in the first hollow structural part (18) by means of a first line clamping device.

8. Robot according to one of claims 1 to 7, **characterized in that** the second strand section (17.2) of the power line strand (17) is formed by individual lines, and each individual line is separately fixed in the second hollow structural part (19) by means of a second line clamping device.

## Revendications

1. Robot comprenant un bras de robot (3) ayant une pluralité d'articulations (L1-L6) reliées par des membres (G1-G7), les articulations (L1-L6) étant réglables par des moteurs d'entraînement (M1-M6) du robot (1) couplés aux articulations (L1-L6) de manière automatisée selon un programme de robot ou de manière commandée par entraînement dans un mode de déplacement manuel du robot (1), pour modifier la configuration du bras de robot (3), dans lequel un première membre (G1-G7) est reliée à un deuxième membre (G1-G7) au moyen d'au moins une articulation (L1-L6) sur laquelle est acheminée un toron de ligne d'énergie (17) du bras de robot (3), qui est formée pour transmettre l'énergie d'entraînement à l'au moins un moteur d'entraînement (M1-M6), dans lequel:
- le premier membre (G1-G7) présente un premier élément structurel creux (18) à l'intérieur duquel est guidée une première section de toron (17.1) du toron de ligne d'énergie (17),
- le deuxième membre (G1-G7) présente un deuxième élément structurel creux (19) à l'intérieur duquel est guidée une deuxième section de toron (17.2) du toron de ligne d'énergie (17),
- le toron de ligne d'énergie (17) présente une section de toron intermédiaire (17.3) s'étendant entre la première section de toron (17.1) du toron de ligne d'énergie (17) et la deuxième section de toron (17.2) du toron de ligne d'énergie (17), la section de toron intermédiaire (17.3) s'étendant à l'extérieur du première élément structurel creux (18) et à l'extérieur du deuxième élément structurel creux (19),
- le bras de robot (3) comprend un logement de ligne (21) renfermant la section de toron intermédiaire (17.3), et
- le logement de ligne (21) est d'un part relié de manière rigide au première élément structurel creux (18) et d'autre part est monté de manière réglable par rapport au deuxième élément structurel creux (19), dans lequel
ledit logement de ligne (21) comprend une coque de logement (21a) ayant une ouverture d'entrée (26) à travers laquelle ladite section de toron intermédiaire (17.3) sortant dudit premier élément structurel creux (18) entre dans ledit logement de ligne (21), et ladite coque de logement (21a) comprend une ouverture de sortie (27) à travers laquelle ladite section de toron intermédiaire (17.3) sort dudit logement de ligne (21) et entre ensuite dans ledit deuxième élément structurel creux (19), dans lequel la coque de logement (21a) comprend une bride (28) entourant l'ouverture d'entrée (26) et adaptée pour fixer rigidement la coque de logement (21a) au premier élément structurel creux (18), et la coque de logement (21a) présente un anneau (31) qui tourne autour de l'ouverture de sortie (27) et fait partie d'un dispositif de support du bras de robot (3) qui supporte de manière rotative la coque de logement (21a) sur le deuxième élément structurel creux (19) et/ou fait partie d'un dispositif d'étanchéité du bras de robot (3) qui rend étanche la coque de logement (21a) contre le deuxième élément structurel creux (19), et dans lequel la ligne électrique (17) comprend un tuyau de protection (20) entourant la section de toron intermédiaire (17.3) et ayant une première extrémité de tuyau de protection (20.1), et la coque de logement (21a) comprend un palier de pivotement (43) adapté pour supporter de manière rotative la première extrémité de tuyau de protection (20.1) sur la coque de logement (21a).

2. Robot selon la revendication 1, **caractérisé en ce que** l'anneau (31) comporte une bande de roulement (32) sur lequel roulent des éléments de roulement (33) d'un dispositif de roulement du bras de robot (3) supportant de manière rotative la coque de logement (21a) sur le deuxième élément structurel creux (19).

3. Robot selon la revendication 1, **caractérisé en ce que** l'anneau (31) comporte une glissière (35) sur laquelle se déplace une bande de guidage (36), montée dans le deuxième élément structurel creux (19), d'un dispositif de palier à glissement du bras de robot (3) supportant de manière rotative la coque de logement (21a) sur le deuxième élément structurel creux (19).

4. Robot selon la revendication 1, **caractérisé en ce que** l'anneau (31) comporte une piste d'étanchéité (37) sur laquelle repose une lèvre d'étanchéité (38a, 38b) d'un dispositif d'étanchéité du bras de robot (3) assurant l'étanchéité de la coque de logement (21a) contre le deuxième élément structurel creux (19).

5. Robot selon l'une quelconque des revendications 1 à 4, **caractérisé en ce que** le logement de ligne (21), en particulier la coque de logement (21a), comporte une ouverture de maintenance (29a) et un couvercle amovible (29) fermant l'ouverture de maintenance (29a).

6. Robot selon l'une quelconque des revendications 1 à 5, **caractérisé en ce que** le tuyau de protection (20) comporte une deuxième extrémité de tuyau de protection (20.2), et le première élément structurel creux (18) ou le deuxième élément structurel creux (19) comporte un collier de serrage (47) adaptée pour fixer rigidement la deuxième extrémité de tuyau de protection (20.2) au première élément structurel creux (18) ou au deuxième élément structurel creux (19) respectivement.

7. Robot selon l'une quelconque des revendications 1 à 6, **caractérisé en ce que** la première section de toron (17.1) du toron de ligne d'énergie (17) est formée de lignes individuelles, et chaque ligne individuelle est fixée séparément au moyen d'un premier dispositif de serrage de ligne dans le première élément structurel creux (18).

8. Robot selon l'une quelconque des revendications 1 à 7, **caractérisé en ce que** la deuxième section de toron (17.2) du toron de ligne d'énergie (17) est formée de lignes individuelles, et chaque ligne individuelle est fixée séparément au moyen d'un deuxième dispositif de serrage de ligne dans le deuxième élément structurel creux (19).
